# EUROPEAN PATENT SPECIFICATION

(11) **EP 3 945 794 B1**
(45) Date of publication and mention of the grant of the patent: **12.02.2025**
(21) Application number: 20717623.1
(22) Date of filing: 03.04.2020
(51) Int. Cl.: A01K 1/06, A61D 3/00

(54) **AN ANIMAL HANDLING CRATE**
TIERHANDHABUNGSKISTE
CAISSE DE MANIPULATION D'ANIMAL

(30) Priority: 03.04.2019 IE S20190056
(43) Date of publication of application: 09.02.2022
(73) Proprietor: The Cotter Crate Limited, Abbeyfeale, Co. Limerick (IE)
(72) Inventor: COTTER, Nick Daniel, Limerick (IE); COTTER, Jack Robert, Limerick (IE)
(74) Representative: Murgitroyd & Company
(86) International application number: PCT/EP2020/059690
(87) International publication number: WO 2020/201569

(56) References cited:
- WO-A1-2019/023750
- CN-U- 207 024 139
- US-A- 2 616 392
- US-A- 5 184 572

## Description

### Field

The present invention relates to an animal handling crate, and in particular, though not limited, to an animal handling crate for handling and retaining relatively small animals, for example, lambs, goats, sheep and the like or domestic pets during the carrying out of one or more procedures on the animal, for example, vaccinating, dosing, delousing, castrating, tailing tagging, branding or the like.

### Background

Animal handling crates are known. They are typically used to temporarily restrain the animal for one of or more of vaccinating, dosing, delousing, castrating, tailing tagging, branding or the like, see e.g. US5184572A.

There continues to be a need for improvements in animal crates that will facilitate the temporary retention of an animal for these purposes.

### Summary

According to the invention there is provided an animal handling crate according to claim 1. It comprises a ground engaging support, a platform supported on the ground engaging support at a level spaced apart above the ground, first and second clamping jaws mounted on the ground engaging support, at least one of the first and second clamping jaws being movable towards the other one of the first and second clamping jaws from an open state for receiving an animal therebetween standing on the platform to a clamping state with the animal retained between the clamping or retaining jaws, and a releasable retaining means for releasably retaining the jaws in the clamping state, with an animal clamped or supported therebetween. The crate is desirably configured such that the relative movement of the first and second clamping jaws towards one another is approximately concurrent or coincident with an opening of the platform so as to allow the animal previously standing on the platform to slip downwardly within the crate. This downward movement is arrested by the position of the jaws in their clamped state such that as the sides of the animal contact the first and second clamping jaws the weight of the animal is supported by the jaws provided on opposing sides of the animal. In this way the animal is suspended by the supporting action of the clamping jaws on either side of the animal's body. Once the clamping jaws are released to cause the jaws revert to the open state, that clamping or supporting action is removed and the animal's previous downward movement through the crate continues.

In other words, it will be understood that as the clamping jaws go from an open to a closed state the gap between the jaws reduces. As long as that gap is less than the width of an animal to be retained, when the floor of the crate opens, the animal will be supported by the clamping jaws. This closed state is effected by an operator actuating the crate to urge at least one of the clamping jaws inward towards the other. In the event that this movement is by means of a ratchet and pawl mechanism the movement is defined by the ratchet action. Immediately after, or concurrent with, the urging of the clamping jaws to their closed state, the operator can release the floor which was previously supporting the animal. The animal will initiate a fall through the gap provided by the removal of the floor or platform. That fall will be arrested by contact of the animal's body with the clamping jaws which are desirably angled relative to one another. It will be understood that the animal's body is typically wider than the distance across its legs such that by providing two angled clamping jaws which taper inwardly towards one another close towards the base of the crate, the downward movement can be minimised. From this point on, until the clamping jaws or walls are released from the closed to the open state, the animal is held or supported under its own weight.

In one embodiment of the invention, the platform is coupled to the ground engaging support, and preferably, is movably coupled to the ground engaging support from a support state for supporting an animal standing thereon between the clamping jaws, to a release state permitting the animal to drop downwardly from the clamping jaws, when the clamping jaws are urged into the open state.

According to the invention, the platform is hingedly coupled to the ground engaging support about a hinge axis, which preferably, extends substantially parallel to the jaws. Advantageously, the platform in the support state extends substantially horizontally, and in the release state extends substantially vertically, and preferably, downwardly, from the hinge axis.

In another embodiment of the invention, a latching means is provided for latching the platform in the support state. Advantageously, the latching means comprises a latch, and preferably, the latch is manually operable from a latched state latching the platform in the support state and a release state for releasing the platform from the support state.

Advantageously, the latch is connected to an operating handle for manually operating the latch.

In another embodiment of the invention, a connecting means is provided connecting the platform to a hand grip element for facilitating urging the platform from the release state to the support state.

Preferably, the hand grip element is mounted on one of the clamping jaws, and the ground engaging support, and preferably, on the first clamping jaw.

According to the invention, a guide means is provided for guiding the at least one of the movable one of the first and second clamping jaws relative to the other one of the first and second clamping jaws between the open state and the clamping state, and advantageously, the guide means is configured to guide the at least one movable one of the first and second clamping jaws in a direction substantially perpendicular to the hinge axis of the platform.

According to the the guide means comprises pair of spaced apart guide tracks located at respective opposite ends of the clamping jaws. The guide tracks extend substantially parallel to each other, and preferably, substantially perpendicularly to the hinge axis of the platform.

According to the invention, each guide track comprises an elongated track member, and each elongated track member is slidably engageable with at least one linear guide, and advantageously, is slidable in a pair of spaced apart linear guides.

Preferably, the movable one of the first and second clamping jaws is manually slidable between the open state and the clamping state.

In one embodiment of the invention each one of the first and second clamping jaws comprises an elongated clamping jaw, and preferably, each one of the first and second clamping jaws comprises a plate member defining a corresponding animal engaging surface for engaging the animal during clamping of the animal between the clamping jaws, and preferably, for engaging an adjacent side of the body of the animal.

In another embodiment of the invention the guide means are located at the respective opposite ends of the clamping jaws.

In another embodiment of the invention the movable one of the first and second clamping jaws is manually movable.

Preferably, the first clamping jaw is rigidly secured to the ground engaging support, and preferably, the second clamping jaw is movable relative to the first clamping jaw. In another embodiment of the invention the retaining means for retaining the movable one of the clamping jaws in the clamping state comprises a pawl and ratchet mechanism.

Preferably, the ratchet mechanism comprises at least one elongated ratchet rack, and preferably, a pair of spaced apart ratchet racks, the ratchet racks being preferably located adjacent respective opposite ends of the clamping jaws, and preferably, adjacent the corresponding guide means.

In another embodiment of the invention, each pawl is coupled to one of the ground engaging support and the first clamping jaw, and preferably, each ratchet rack is coupled to the second clamping jaw. In one embodiment of the invention each ratchet rack comprises a plurality of spaced apart ratchet teeth, and preferably, the ratchet rack is slidable on the ground engaging support.

Preferably, each pawl is pivotally coupled on one of the ground engaging support and the first jaw, and preferably, is pivotal from an engaged state engaging the ratchet rack, and a release state for releasing the second clamping jaw from the clamping state.

Preferably, an operating handle is provided for operating the pawl between the engaged state and the release state. In another arrangement, the crate could be configured such that the clamping jaws can pivot toward or away from the operator such that improved access would be provided to perform the likes of dagging, tailing, castrating, application of ecto- and endo-parasite treatments, inspection of the back portion of an animal or the like.

Accordingly there is provided an animal handling crate as detailed in the claims that follow.

### Brief Description of the Drawings

The invention will be more clearly understood from the following description of an embodiment thereof, which is given by way of example only with reference to the accompanying drawings, in which:
Fig. 1 is a perspective view of an animal handling crate according to the invention,
Fig. 2 is another perspective view of the crate of Fig. 1,
Fig. 3 is a further perspective view of the crate of Fig. 1,
Fig. 4 is another perspective view of the crate of Fig. 1 showing a portion of the crate in a different state to that of Fig. 1,

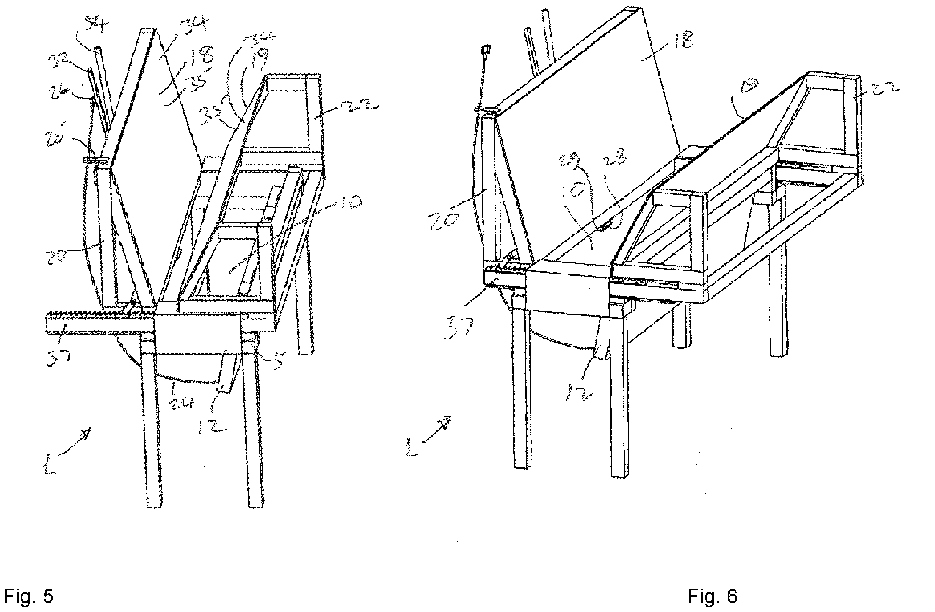

Fig. 5 is another perspective view of the crate of Fig. 1 showing another portion of the crate in a different state to that of Fig. 1,
Fig. 6 is a perspective view of the crate of Fig. 1 with a portion of the crate in a similar state to that of Fig. 5,

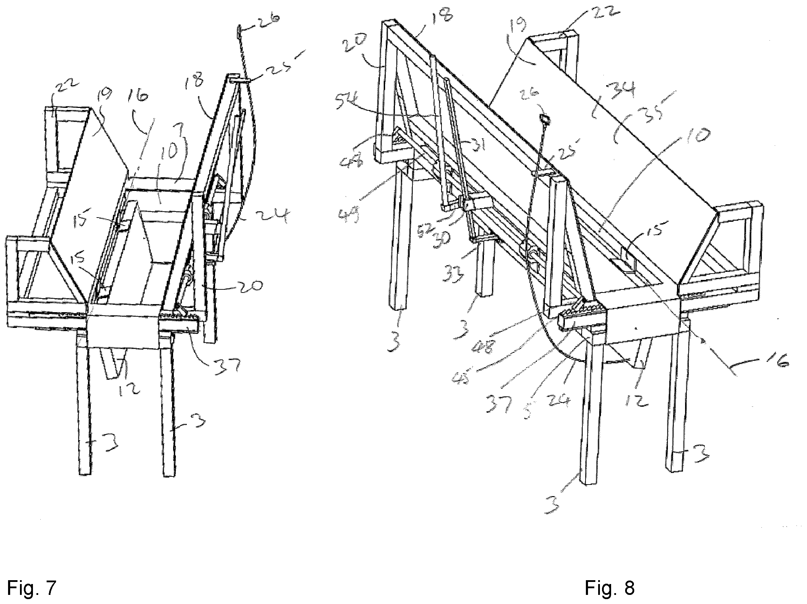

Fig. 7 is another perspective view of the animal crate of Fig. 1,
Fig. 8 is a further perspective view of the animal crate of Fig. 1,

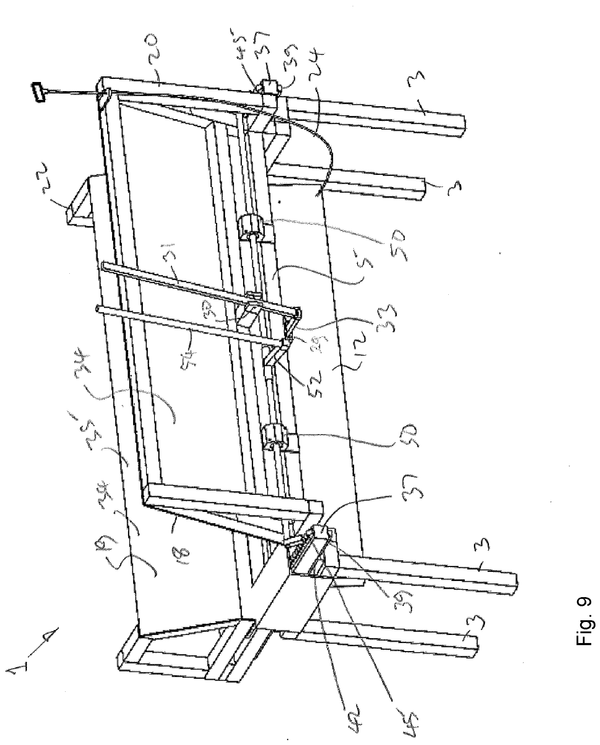

Fig. 9 is another perspective view of the animal crate of Fig. 1,

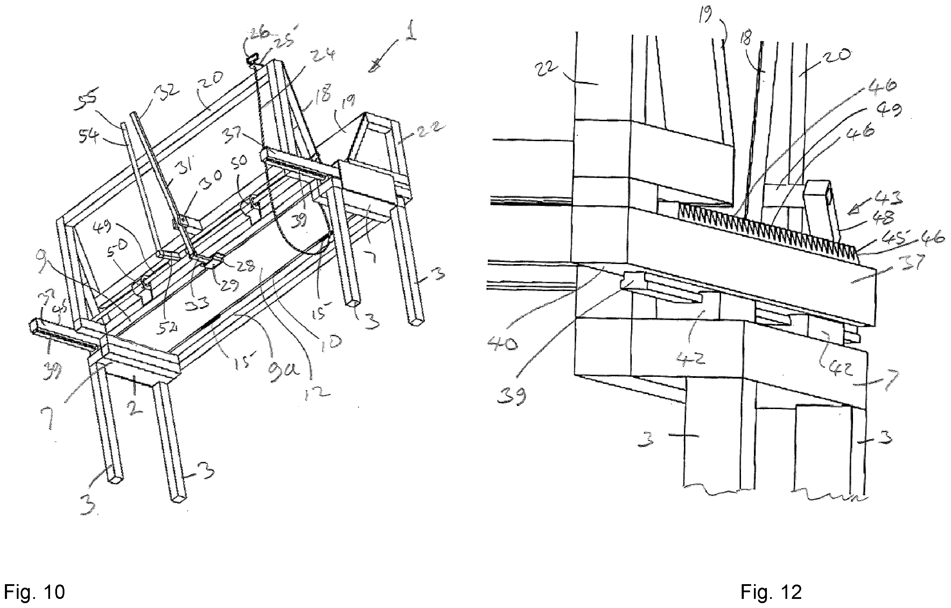

Fig. 10 is an underneath perspective view of the animal crate of Fig. 1,

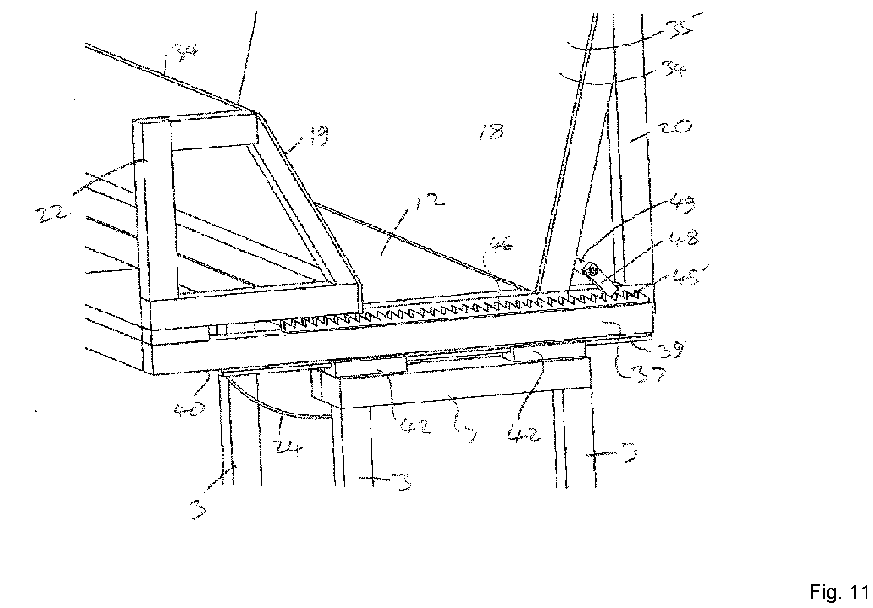

Fig. 11 is an enlarged perspective view of a detail of the animal crate of Fig. 1,
Fig. 12 is another enlarged perspective view of another detail of the crate of Fig. 1,

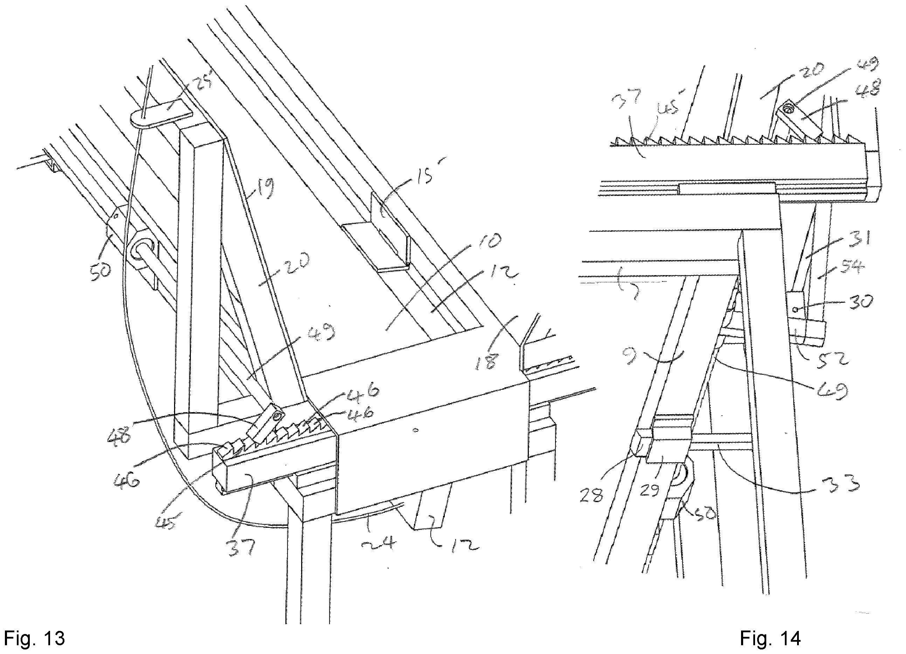

Fig. 13 is an enlarged perspective view of a further detail of the crate of Fig. 1,
Fig. 14 is another enlarged perspective view of a detail of the crate of Fig, 1 and

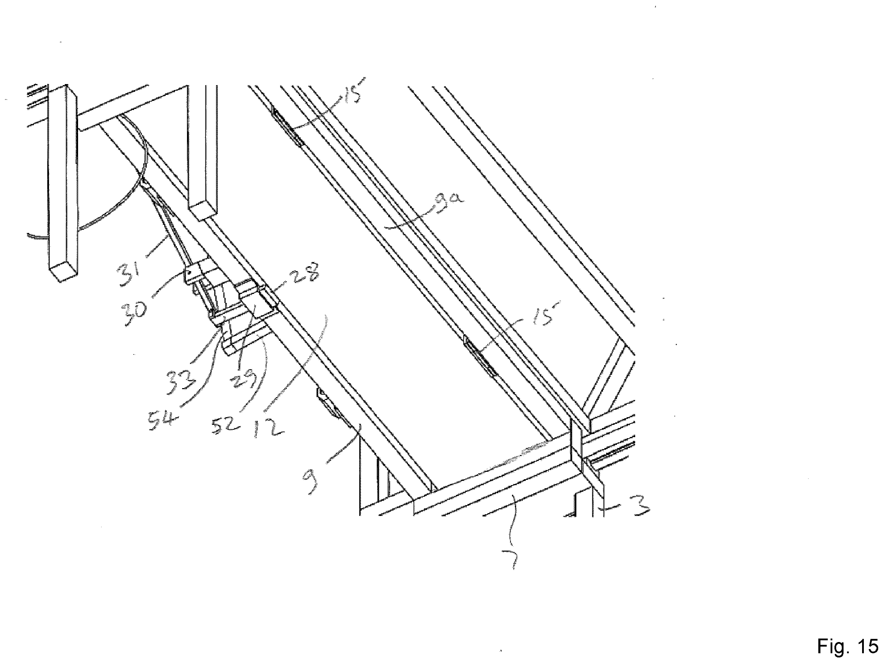

Fig. 15 is an underneath perspective view of a detail of the animal crate of Fig. 1.

### Detailed Description of the Drawings

Referring to the drawings, there is illustrated an animal handling crate according to the invention indicated generally by the reference numeral 1, which in this embodiment of the invention is particularly suitable for holding and restraining a relatively small animal, for example, a lamb, during the carrying out of a procedure on the lamb, for example, vaccinating the lamb, dosing the lamb, delousing the lamb, castrating the lamb, tailing the lamb, tagging the lamb, branding the lamb or the like. The animal handling crate is also suitable for use in carrying out a procedure on other relatively small animals, for example, goats and domestic animals, such as dogs or the like. The animal crate 1 comprises a ground engaging support 2 comprising a main framework 5 supported above the ground on four spaced apart upstanding ground engaging legs 3. Whilst illustrated without wheels or castors, it will be appreciated that these could be used to facilitate a moving of the crate when not being used.

The main framework 5 comprises a pair of spaced apart end members 7 supported on corresponding pairs of the legs 3. A pair of spaced apart elongated longitudinally extending members 9 extend between the end members 7 and define with the end members 7 an escape opening 10. The escape opening 10 is closed by a platform 12 for supporting a lamb standing thereon. It will be appreciated that the reference to lamb is an example of the type of animal (typically four-legged animal) that can be retained by a crate in accordance with the present teaching. The present teaching should not be considered as being limited to use only with lambs. The platform 12 is hingedly coupled to a forward one of the longitudinal members 9, namely, the longitudinal member 9a by a pair of hinges 15 which define a hinge axis 16 about which the platform 12 is pivotal from a closed or support state for supporting a lamb standing thereon, and a release state or open state permitting the lamb to drop through the escape opening 10 to the ground.

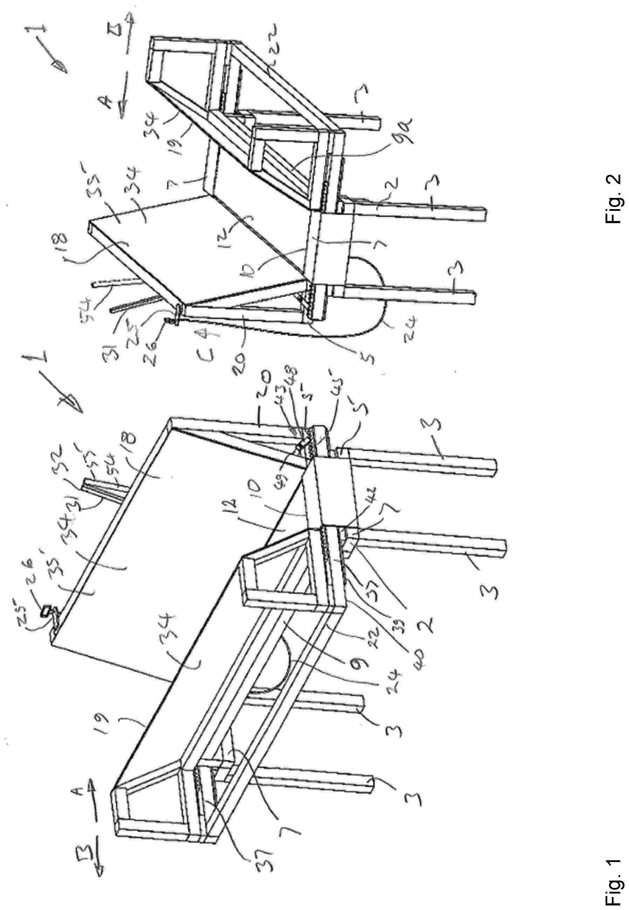

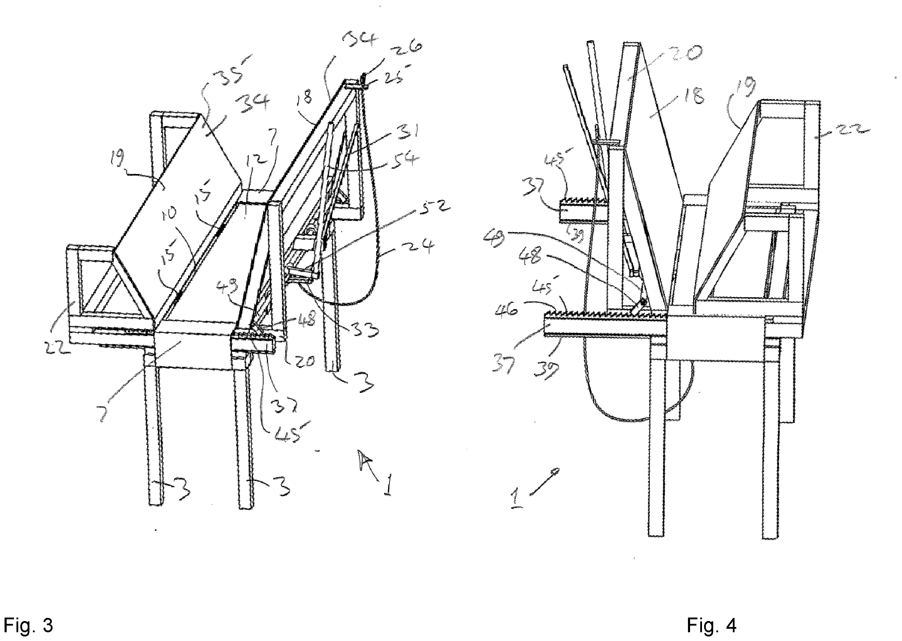

A pair of clamping jaws, namely, a first clamping jaw 18 and a second clamping jaw 19 are provided on the ground engaging support 2 for clamping and retaining a lamb standing on the platform 12 therebetween during carrying out of one or more procedures on the lamb. The first clamping jaw 18 is mounted on a rear framework 20 which is rigidly secured to the main framework 5. The second clamping jaw 19 is mounted on a carrier frame 22 which is slidably mounted on the main framework 5 in the directions of the arrows A and B for facilitating urging the second clamping jaw 19 relative to the first clamping jaw 18 between an open state illustrated in Fig. 1 and a clamping state illustrated in Fig. 4. In this clamping state, the lamb which was previously standing on the platform 12 is now suspended over the opening that was previously closed by the platform and is supported by the clamping action of the opposing clamping jaws on the body of the animal, thereby being retained between the clamping jaws 18 and 19.

It will be appreciated from inspection of the Figures that in this exemplary arrangement each of the clamping jaws comprise a planar surface that is angularly offset from the platform 12. In this example, each of the surfaces that define respective jaws 18, 19 are offset at a different angle relative to the platform 12. It will be understood that different angles could be used depending on circumstances of use such as for example the size of the animal to be retained. The angle of one or both of the clamping jaws could be adjustable relative to the platform and the other of the clamping jaws. It will also be understood that whilst these exemplary surfaces are planar, that it is possible to provide surfaces with curves, depending on the level of retention of the animal.

Whilst the Figures illustrate a sliding mechanism facilitating the relative movement of the clamping jaws relative to one another, other movements can equally be envisaged within the context of the present teaching. For example, having one or both of the clamping jaws being pivotable relative to the other one, will equally facilitate a movement from a release state to a clamping state.

Turning initially to the platform 12, a connecting means, in this embodiment of the invention a connecting cable 24 is connected to the platform 12 and passes through an eyelet bracket 25 mounted on the rear framework 20. The cable 24 terminates in a handgrip element 26 for facilitating gripping and pulling the cable 24 in the direction of the arrow C for urging the platform 12 from the release or open state to the support or closed state. A latching means, in this embodiment of the invention, a latch 28 is slidable in a guide element 29 between a latched state for engaging and latching the platform 12 in the closed or support state, and a released state disengaged from the platform 12 for facilitating pivoting of the platform 12 from the support state to the release state. An operating handle 31 pivotally coupled to the rear framework 20 about a pivot pin 30 is connected to the latch 28 by a connecting member 33 and extends upwardly from the connecting member 33 and terminates in an upper hand grip portion 32 for facilitating manual operation of the latch 28.

Turning now to the first and second clamping jaws 18 and 19, each clamping jaw 18 and 19 comprises a plate member 34 which defines an engagement surface 35 for engaging the lamb on an adjacent side of the lamb for clamping and retaining the lamb therebetween. The rear framework 20 and the carrier framework 22 are configured so that the engagement surfaces 35 defined by the plate members 34 of the respective first and second clamping jaws 18 and 19 diverge outwardly upwardly from the platform 12. The carrier frame 22 comprises a pair of spaced apart end runner elements 37 which are slidable in the main framework 5 in the direction of the arrows A and B for urging the second clamping jaw 19 relative to the first clamping jaw 18 between the clamping state and the release state.

A guide means, in this embodiment of the invention, an elongated guide member 39 of T-shaped cross-section is secured to an underside 40 of each end runner 37. Each guide member 39 engages a pair of spaced apart linear bearings 42 mounted on the corresponding one of the end members 7. The guide members 39 co-operate with the linear bearings 42 for guiding the second clamping jaw 19 in the direction of the arrows A and B towards and away from the first clamping jaw 18. The guide members 39 and the linear bearings 42 are configured so that the second clamping jaw 19 is urged relative to the first clamping jaw 18 between the clamping and release states in directions substantially perpendicular to the hinge axis 16 defined by the hinges 15 of the platform 12.

A pair of releasable retaining means, in this embodiment of the invention a pair of pawl and ratchet mechanisms 43 are provided for releasably retaining the second clamping jaw 19 in the clamping state relative to the first clamping jaw 18. However, it will be readily apparent to those skilled in the art that the clamping state of the second clamping jaw 19 for one animal may be different to the clamping state of the second clamping jaw 19 for another animal, depending on the size and width of the body of the animals. Each pawl and ratchet mechanism 43 comprises an elongated ratchet rack 45 secured to the corresponding end runner 37 of the second clamping jaw 19. Each ratchet rack 45 comprises a plurality of spaced apart ratchet teeth 46 longitudinally spaced apart along the length of the ratchet rack 45. A pair of pawls 48 are rigidly secured to an elongated pivot shaft 49 at respective opposite ends thereof, which is pivotally coupled to the main framework 5 by a pair of spaced apart plumber block bearings 50 which are secured to the main framework 5. Each pawl 48 co-operates with a corresponding one of the ratchet racks 45 for retaining the second clamping jaw 19 in the clamping state. The pawls 48 are spring urged into engagement with the respective ratchet racks 45 by a suitable spring or springs (not shown.)

An operating lever 52 rigidly secured to the pivot shaft 49 and extending radially therefrom is rigidly secured to an operating member 54 which extends upwardly from the operating lever 52 to the rear of the rear framework 20 and the first clamping jaw 18. The operating member 54 terminates in a hand grip portion 55 for facilitating operating of the pivot shaft 49 for in turn releasing the pawls 48 from the corresponding ratchet racks 48 in order to permit urging of the second clamping jaw 19 in the direction of the arrow B from the clamping state to the release state.

In use, with the platform 12 in the supporting state and with the second clamping jaw 19 in the open state relative to the first clamping jaw 18, an animal on which a procedure is to be carried out walks onto or is placed standing on the platform 12 between the first and second clamping jaws 18 and 19. An operator standing in front of the second clamping jaw 19 immediately urges the second clamping jaw 19 in the direction of the arrow A from the open state to the clamping state for firmly clamping the animal between the first and second clamping jaws 18 and 19. The second clamping jaw 19 is urged from the open state into the clamping state by urging the carrier frame 22 in the direction of the arrow A; this may be carried out by the operator manually by hand, or by the operator urging his or her body against the carrier frame 22. The pawls 48 engaging respective teeth 46 in the corresponding ratchet racks 45 retain the second clamping jaw 19 in the clamping state. Coincident with this relative movement of the clamping jaws towards one another, the the operator pulls the operating handle 31 forwardly to release the latch 28 and to allow the platform 12 to pivot into the release state. It will be appreciated that absent complete clamping of the animal, that this release of the latch and the subsequent pivoting of the platform removes the support for the animal. The animal will, as a result, experience a temporary downward movement in a direction transverse to the movement of the jaws towards one another. This downward movement is arrested by the animal contacting the surfaces of the clamping jaws which on contact with the animal support the animal - the animal is effectively suspended in the crate. In this way, the movement of the platform and the clamping jaws is to effectively leave the animal clamped between the clamping jaws 18 and 19 with its legs freely suspended, and therefore immobilised. With the animal securely retained between the first and second clamping jaws 18 and 19, procedures to be carried out on the animal may then be carried out.

On completion of the procedures being carried out on the animal, the operating member 54 is operated for releasing the pawls 43 from the ratchet racks 45 to thereby release the second clamping jaw 19 to slide from the clamping state to the open state in the direction of the arrow B under the weight of the animal bearing on the engagement surfaces 35 of the plate members 34 of the clamping jaws 18 and 19. The animal then drops, or continues its previously arrested drop, through the escape opening 10 in the main framework 5 to the ground. The hand grip element 26 of the cable 24 is then gripped and urged towards the operator for in turn urging the platform 12 into the support state, so that the animal handling crate 1 is ready to receive the next animal to be treated.

It will be appreciated that the pivoting arrangement of the platform herein described is a preferred configuration of how to facilitate a discharge of the animal out of the crate through the escape opening. Other arrangements such a pivoting from the other side or the segmentation of the platform into first and second segments which each pivot or otherwise move from one another could equally be used to allow the platform adopt a support and release state.

The operation of the crate heretofore described has been a manual operation with mechanical couplings and inter-engagements being used to effect respective movements of the clamping jaws and the platform. It will be appreciated that modifications to this could employ assisted movement of one or both of the jaws or platform. For example, spring or pneumatic/hydraulic arrangements could be used to effect movement. Electrical actuation could also be employed. It will be appreciated that the use of an assisted movement can also be electronically triggered through the use of one or more sensors or other actuators to determine when to effect movement from the capture to the release mode and vice versa.

In this embodiment of the invention the legs 3 of the ground engaging support 2 support the main framework 5 at a level above the ground sufficiently high above the ground that an animal dropped through the escape opening 10 can walk beneath the main framework 5 without any danger of injury to the animal. The height of these legs may be adjustable to facilitate different use/ user preferences. The legs could be foldable or otherwise moveable to facilitate storage in a reduced size.

The advantages of the invention are many. A particularly important advantage of the invention is that it is particularly suitable for clamping and retaining relatively small animals, for example, lambs, goats, domestic pets and the like to allow a procedure or treatment to be carried out on the animal while constrained between the clamping jaws.

In an arrangement not shown, the incorporation of a weighing arrangement- such as through weigh bars or load cells- into the crate could be usefully employed to effect a weighing of the animal whilst it is in a constrained state. This weighing arrangement could be configured to communicate electronically, either through a wired connection or wirelessly- with a display to effect a display of the weight. That recorded weight could also, or alternatively, be transmitted to a memory for subsequent use. Such a storage of parameters of the animal could be advantageously employed through additional use of a reader, such as an animal tag reader, that would uniquely identify the animal being constrained and then associate parameters such as weight of that animal in a database for subsequent interrogation. In the event that the crate is used for dosing purposes using a dosing mechanism such as a dosing gun or doser, the crate could be configured such that activation of a doser could also be identified and written to a database to ensure a tracking of animal dosage histories. This could be configured for example to track different dosage regimes given to different animals based on their weight. In this way the reader is configured to effect an identification of an animal being retained, the crate being configured such that activation of the dosing gun effects association of a dosing regime with an identified animal, the association being recorded in the database.

A further advantage of the invention is that it provides a relatively low cost solution to the problem of carrying out procedures and treatments of lambs and the like, and particularly where large numbers of animals are to be treated. By virtue of the fact that the animal is initially restrained by clamping the animal laterally between the clamping jaws, and then by releasing the platform into the release state, the animal is effectively immobilised since its legs are freely suspended, and its feet are no longer in engagement with the platform, and therefore the animal has no motive power to release itself or to urge itself upwardly between the clamping jaws. Thus, the animal is gently immobilised until the second clamping jaw 19 is released from the clamping state to the open state. This allows an operator to carry out multiple procedures and treatments on the animal in a stress free environment for both the operator and the animal. This latter advantage is achieved by virtue of the fact that the clamping jaws diverge in a generally upwardly direction from the platform, or in other words, the engagement surfaces of the clamping jaws are configured to extend in a generally downwardly direction converging towards each other.

Globally there is great concern about the high level of antibiotics and anthelmintics being used in animal agriculture and the consequent increase in antimicrobial resistance (AMR) in humans. One clearly identified solution is the increased use of vaccines and reduced use of anthelmintics.

A significant barrier to the use of vaccines in small animals is the difficulty in restraining the animals such as lambs and the administering of the vaccine safely and effectively. This animal handling crate will facilitate the easy, safe, quick and accurate administration of vaccines, anthelmintics and other necessary animal health products to animals such as lambs, goats, sheep, domestic pets and the like. In an arrangement where this animal handling crate is used in conjunction with a weighing system that provides data such as average daily gain, it will facilitate dosing by average daily gain, which has been shown to significantly reduce the use of anthelmintics. It will be appreciated that the size of the animal being retained in the crate will determine the geometry and dimensions of the clamping jaws, floor and indeed the material used in fabrication.

While various mechanisms and operating levers, members, handles and cables have been described for operating the various aspects of the animal handling crate, any other suitable operating mechanism levers, members, handles, cables and the like may be used. It will also be appreciated that other guide means besides those described may be used. It will also be appreciated that some of the operations of the various components of the animal handling crate 1 may be mechanised by, for example, electrically powered motors, pneumatic or hydraulic systems. Additional sensors and/or rams may also be incorporated, and these may be implemented using electrical, pneumatic or hydraulic technologies. In this way it will be appreciated that movement of at least one component of the crate can be power assisted.

While the clamping jaws have been described as being inclined upwardly outwardly and diverging upwardly from each other, it will be readily apparent to those skilled in the art that the clamping jaws may be configured to be parallel jaws, or may be configured to be of any other suitable orientation and configuration. Indeed, within the context of the present teaching, the clamping jaws could be pivotable as opposed to slideable relative to one another. What is important is that there is a clamping arrangement between opposing surfaces that can effect a capture of an animal between the opposing surfaces in a manner that will facilitate a suspension of the animal over a gap in the crate that was previously occluded by the platform upon which the animal was supported..

Needless to say, any other suitable clamping jaws besides jaws constructed to include a plate member may be provided.

It will be appreciated that exemplary arrangement of an animal handling crate have been described. The crate is configured for handling and retaining relatively small animals, for example, lambs, goats and the like or domestic pets during the carrying out of one or more procedures on the animal, for example, vaccinating, dosing, delousing, castrating, tailing, tagging, branding or the like. In accordance with the present teaching, the animal being retained, is supported by its own weight by contact of the sides of the animal with two opposing side walls, or clamping jaws. The movement of the jaws away from one another, removes the supporting surfaces and facilitates the release of the animal which drops through the crate.

The invention is not limited to the embodiment hereinbefore described which may be varied in construction and detail. The invention is defined in the appended claims.

## Claims

1. An animal handling crate (1) comprising:
a ground engaging support (2);
a platform (12) supported on the ground engaging support (2) at a level spaced apart above the ground;
first and second clamping jaws (18,19) mounted on the ground engaging support (2), at least one of the first and second clamping jaws (18,19) being movable towards the other one of the first and second clamping jaws (18,19) from an open state for receiving an animal therebetween standing on the platform (12) to a clamping state with the animal retained between and supported by the clamping jaws (18,19);
a releasable retaining means (43) for releasably retaining the jaws (18,19) in the clamping state, with an animal clamped therebetween;
wherein the platform (12) is movably coupled to the ground engaging support (2) from a support state for supporting an animal standing thereon between the clamping jaws (18,19), to a release state permitting the animal to drop downwardly from the clamping jaws (18,19), the animal being operatively retained and supported by the clamping jaws (18,19) while the clamping jaws (18,19) are in the clamping state, the crate (1) being configured such that the animal can be dropped downwardly by a release of the clamping jaws (18,19) into the open state from the clamping state;
**characterized in that** the platform (12) is hingedly coupled to the ground engaging support (2) about a hinge axis (16), and that the crate (1) further comprises a guide means provided for guiding the at least one of the movable one of the first and second clamping jaws (18,19) relative to the other one of the first and second clamping jaws (18,19) between the open state and the clamping state, wherein the guide means comprises a pair of spaced apart guide tracks located at respective opposite ends of the clamping jaws (18,19) and extending parallel to each other, wherein each guide track comprises an elongated track member (39), each elongated track member (39) being slidably engagable with at least one linear guide (42).

2. The crate (1) of claim 1 wherein the clamping jaws (18,19) are biased towards the open state such that actuation of the releasable retaining means (43) effects a movement of the jaws (18,19) from the clamping state to the open state.

3. The crate (1) of any preceding claims comprising at least one of a hand, leg or foot actuator configured to effect movement of the clamping jaws (18,19) relative to one another.

4. The crate (1) as claimed in any preceding claim wherein the platform (12) in the support state extends substantially horizontally, and in the release state extends substantially vertically, and preferably, downwardly, from the hinge axis (16).

5. The crate (1) as claimed in any preceding claim comprising a latch (28) for latching the platform (12) in the support state, the latch (28) being operable from a latched state latching the platform in (12) the support state and a release state for releasing the platform (12) from the support state.

6. The crate (1) as claimed in any preceding claim wherein the guide means is configured to guide the at least one movable one of the first and second clamping jaws (18,19) in a direction substantially perpendicular to the hinge axis (16) of the platform (12).

7. The crate (1) as claimed in any preceding claim wherein each one of the first and second clamping jaws (18,19) comprises an elongated clamping jaw provided by a plate member (34), the plate member (34) defining a corresponding animal engaging surface (35) for engaging the animal during clamping of the animal between the clamping jaws (18,19), and preferably, for engaging an adjacent side of the body of the animal.

8. The crate (1) as claimed in any preceding claim wherein the guide means are located at the respective opposite ends of the clamping jaws (18,19).

9. The crate (1) as claimed in any preceding claim wherein the first clamping jaw (18) is rigidly secured to the ground engaging support (2), and the second clamping jaw (19) is movable relative to the first clamping jaw (18).

10. The crate (1) as claimed in any preceding claim wherein the retaining means for retaining the movable one of the clamping jaws (18,19) in the clamping state comprises a pawl and ratchet mechanism (43),
preferably the ratchet mechanism (43) comprises at least one elongated ratchet rack (45), and preferably, a pair of spaced apart ratchet racks (45), the ratchet racks (45) being located adjacent respective opposite ends of the clamping jaws (18,19),
preferably each pawl (48) is coupled to one of the ground engaging support (2) and the first clamping jaw (18), preferably each ratchet rack (45) is coupled to the second clamping jaw (19),
preferably each ratchet rack (45) comprises a plurality of spaced apart ratchet teeth (46), and preferably, the ratchet rack (45) is slidable on the ground engaging support (2).

11. The crate (1) as claimed in claim 10 wherein each pawl (48) is pivotally coupled on one of the ground engaging support (2) and the first jaw (18), and is pivotal from an engaged state engaging the ratchet rack (45), and a release state for releasing the second clamping jaw (19) from the clamping state.

12. The crate (1) as claimed in any one of claims 10 to 11 comprising an operating mechanism (54) for operating the pawl (48) between the engaged state and the release state.

13. The crate as claimed in any preceding claim comprising a weighing system configured to effect a recordal of a retained animal within the crate.

14. The crate as claimed in any preceding claim comprising a dosing mechanism, the dosing mechanism comprising at least one dosing gun configured to effect a dosing of a retained animal within the crate.

15. The crate as claimed in claim 14 comprising a reader in electronic communication with a database, the reader being configured to effect an identification of an animal being retained, the crate being configured such that activation of the dosing gun effects association of a dosing regime with an identified animal, the association being recorded in the database.

## Patentansprüche

1. Eine Tierhandhabungskiste (1), die Folgendes beinhaltet:
eine Bodeneingriffsabstützung (2);
eine Plattform (12), die auf der Bodeneingriffsabstützung (2) auf einer über dem Boden beabstandeten Höhe abgestützt wird;
eine erste und eine zweite Klemmbacke (18, 19), die auf der Bodeneingriffsabstützung (2) befestigt sind, wobei mindestens eine der ersten und zweiten Klemmbacke (18, 19) von einem geöffneten Zustand zum Aufnehmen eines auf der Plattform (12) stehenden Tieres zwischen diesen in Richtung der anderen der ersten und zweiten Klemmbacke (18, 19) in einen Klemmzustand bewegbar ist, wobei das Tier zwischen den Klemmbacken (18, 19) gehalten und durch diese abgestützt wird;
ein lösbares Haltemittel (43) zum lösbaren Halten der Backen (18, 19) in dem Klemmzustand, wobei ein Tier zwischen diesen geklemmt ist;
wobei die Plattform (12) mit der Bodeneingriffsabstützung (2) von einem Abstützzustand zum Abstützen eines darauf zwischen den Klemmbacken (18, 19) stehenden Tieres in einen Lösezustand bewegbar gekoppelt wird, wodurch gestattet wird, dass das Tier von den Klemmbacken (18, 19) nach unten fällt, wobei das Tier betriebsmäßig durch die Klemmbacken (18, 19) gehalten und abgestützt wird, während die Klemmbacken (18, 19) in dem Klemmzustand sind, wobei die Kiste (1) derart konfiguriert ist, dass das Tier durch ein Lösen der Klemmbacken (18, 19) von dem Klemmzustand in den geöffneten Zustand nach unten fallen gelassen werden kann;
**dadurch gekennzeichnet, dass** die Plattform (12) mit der Bodeneingriffsabstützung (2) um eine Gelenkachse (16) gelenkig gekoppelt ist und dass die Kiste (1) ferner ein Führungsmittel beinhaltet, das zum Führen der mindestens einen der bewegbaren der ersten und zweiten Klemmbacke (18, 19) relativ zu der anderen der ersten und zweiten Klemmbacke (18, 19) zwischen dem geöffneten Zustand und dem Klemmzustand bereitgestellt ist, wobei das Führungsmittel ein Paar beabstandeter Führungsschienen beinhaltet, die an jeweiligen entgegengesetzten Enden der Klemmbacken (18, 19) liegen und sich parallel zueinander erstrecken, wobei jede Führungsschiene ein längliches Schienenglied (39) beinhaltet, wobei jedes längliche Schienenglied (39) mit mindestens einer linearen Führung (42) gleitbeweglich in Eingriff gebracht werden kann.

2. Kiste (1) gemäß Anspruch 1, wobei die Klemmbacken (18, 19) in Richtung des geöffneten Zustands vorgespannt sind, sodass eine Betätigung des lösbaren Haltemittels (43) eine Bewegung der Backen (18, 19) von dem Klemmzustand in den geöffneten Zustand bewirkt.

3. Kiste (1) gemäß einem der vorhergehenden Ansprüche, die mindestens eine von einer Hand-, Bein- oder Fußbetätigungseinrichtung beinhaltet, die dazu konfiguriert ist, eine Bewegung der Klemmbacken (18, 19) relativ zueinander zu bewirken.

4. Kiste (1) gemäß einem vorhergehenden Anspruch, wobei sich die Plattform (12) in dem Abstützzustand im Wesentlichen horizontal erstreckt und in dem Lösezustand im Wesentlichen vertikal und bevorzugt von der Gelenkachse (16) nach unten erstreckt.

5. Kiste (1) gemäß einem vorhergehenden Anspruch, die einen Riegel (28) zum Verriegeln der Plattform (12) in dem Abstützzustand beinhaltet, wobei der Riegel (28) von einem die Plattform (12) in dem Abstützzustand verriegelnden Zustand und einem Lösezustand zum Lösen der Plattform (12) aus dem Abstützzustand betriebsfähig ist.

6. Kiste (1) gemäß einem vorhergehenden Anspruch, wobei das Führungsmittel dazu konfiguriert ist, die mindestens eine bewegbare der ersten und zweiten Klemmbacke (18, 19) in eine im Wesentlichen zu der Gelenkachse (16) der Plattform (12) senkrechte Richtung zu führen.

7. Kiste (1) gemäß einem vorhergehenden Anspruch, wobei jede der ersten und zweiten Klemmbacke (18, 19) eine längliche Klemmbacke beinhaltet, die durch ein Plattenglied (34) bereitgestellt wird, wobei das Plattenglied (34) eine entsprechende Tiereingriffsfläche (35) zum Ineingriffnehmen des Tieres während des Klemmens des Tieres zwischen den Klemmbacken (18, 19) und bevorzugt zum Ineingriffnehmen einer angrenzenden Seite des Körpers des Tieres definiert.

8. Kiste (1) gemäß einem vorhergehenden Anspruch, wobei die Führungsmittel an den entsprechenden entgegengesetzten Enden der Klemmbacken (18, 19) liegen.

9. Kiste (1) gemäß einem vorhergehenden Anspruch, wobei die erste Klemmbacke (18) an der Bodeneingriffsabstützung (2) starr gesichert ist und die zweite Klemmbacke (19) relativ zu der ersten Klemmbacke (18) bewegbar ist.

10. Kiste (1) gemäß einem vorhergehenden Anspruch, wobei das Haltemittel zum Halten der bewegbaren der Klemmbacken (18, 19) in dem Klemmzustand einen Klinken- und Ratschenmechanismus (43) beinhaltet,
wobei bevorzugt der Ratschenmechanismus (43) mindestens eine längliche Ratschenstange (45) und bevorzugt ein Paar beabstandeter Ratschenstangen (45) beinhaltet, wobei die Ratschenstangen (45) an jeweiligen entgegengesetzten Enden der Klemmbacken (18, 19) angrenzend liegen,
wobei bevorzugt jede Klinke (48) mit einer von der Bodeneingriffsabstützung (2) und der ersten Klemmbacke (18) gekoppelt ist, wobei bevorzugt jede Ratschenstange (45) mit der zweiten Klemmbacke (19) gekoppelt ist,
wobei bevorzugt jede Ratschenstange (45) eine Vielzahl von beabstandeten Ratschenzähnen (46) beinhaltet und bevorzugt die Ratschenstange (45) auf der Bodeneingriffsabstützung (2) gleitbeweglich ist.

11. Kiste (1) gemäß Anspruch 10, wobei jede Klinke (48) auf einer von der Bodeneingriffsabstützung (2) und der ersten Backe (18) schwenkbeweglich gekoppelt ist und von einem die Ratschenstange (45) in Eingriff nehmenden eingegriffenen Zustand und einem Lösezustand zum Lösen der zweiten Klemmbacke (19) von dem Klemmzustand schwenkbar ist.

12. Kiste (1) gemäß einem der Ansprüche 10 bis 11, die einen Betriebsmechanismus (54) zum Betreiben der Klinke (48) zwischen dem eingegriffenen Zustand und dem Lösezustand beinhaltet.

13. Kiste gemäß einem vorhergehenden Anspruch, die ein Wägesystem beinhaltet, das dazu konfiguriert ist, eine Aufzeichnung eines in der Kiste gehaltenen Tieres zu bewirken.

14. Kiste gemäß einem vorhergehenden Anspruch, die einen Dosierungsmechanismus beinhaltet, wobei der Dosierungsmechanismus mindestens eine Dosierungspistole beinhaltet, die dazu konfiguriert ist, eine Dosierung eines in der Kiste gehaltenen Tieres zu bewirken.

15. Kiste gemäß Anspruch 14, die ein Lesegerät in elektronischer Kommunikation mit einer Datenbank beinhaltet, wobei das Lesegerät dazu konfiguriert ist, eine Identifizierung eines gehaltenen Tieres zu bewirken, wobei die Kiste derart konfiguriert ist, dass eine Betätigung der Dosierungspistole eine Assoziierung eines Dosierungsregimes mit einem identifizierten Tier bewirkt, wobei die Assoziierung in der Datenbank aufgezeichnet wird.

## Revendications

1. Une caisse de manipulation d'un animal (1) comprenant :
un support de mise en prise avec le sol (2) ;
une plate-forme (12) supportée par le support de mise en prise avec le sol (2) à un niveau espacé au-dessus du sol ;
des première et seconde mâchoires de serrage (18, 19) montées sur le support de mise en prise avec le sol (2), au moins une des première et seconde mâchoires de serrage (18, 19) étant mobile vers l'autre des première et seconde mâchoires de serrage (18, 19) depuis un état ouvert destiné à recevoir entre celles-ci un animal debout sur la plate-forme (12) jusqu'à un état de serrage, avec l'animal retenu entre les mâchoires de serrage (18, 19) et supporté par celles-ci ;
un moyen de retenue libérable (43) destiné à retenir de manière libérable les mâchoires (18, 19) dans l'état de serrage, avec un animal serré entre celles-ci ;
où la plate-forme (12) est accouplée de manière mobile au support de mise en prise avec le sol (2) depuis un état de support destiné à supporter un animal debout sur celle-ci entre les mâchoires de serrage (18, 19), jusqu'à un état de libération permettant à l'animal de tomber vers le bas depuis les mâchoires de serrage (18, 19), l'animal étant fonctionnellement retenu et supporté par les mâchoires de serrage (18, 19) pendant que les mâchoires de serrage (18, 19) sont dans l'état de serrage, la caisse (1) étant configurée de telle sorte que l'animal peut être lâché vers le bas par une libération des mâchoires de serrage (18, 19) vers l'état ouvert, depuis l'état de serrage ;
**caractérisée en ce que** la plate-forme (12) est accouplée de manière articulée au support de mise en prise avec le sol (2) autour d'un axe de charnière (16), et **en ce que** la caisse (1) comprend en outre un moyen de guidage fourni pour guider l'au moins une de la ou des première et seconde mâchoires de serrage (18, 19) mobile(s) par rapport à l'autre des première et seconde mâchoires de serrage (18, 19) entre l'état ouvert et l'état de serrage, le moyen de guidage comprenant une paire de pistes de guidage espacées situées à des extrémités opposées respectives des mâchoires de serrage (18, 19) et s'étendant parallèlement l'une à l'autre, chaque piste de guidage comprenant un élément de piste allongé (39), chaque élément de piste allongé (39) pouvant venir en prise de manière coulissante avec un moins un guide linéaire (42).

2. La caisse (1) de la revendication 1 où les mâchoires de serrage (18,19) sont sollicitées vers l'état ouvert de telle sorte que l'actionnement du moyen de retenue libérable (43) effectue un mouvement des mâchoires (18, 19) depuis l'état de serrage jusqu'à l'état ouvert.

3. La caisse (1) de n'importe quelles revendications précédentes comprenant au moins un actionneur parmi un actionneur à main, à jambe ou à pied configuré pour effectuer le mouvement des mâchoires de serrage (18, 19) l'une par rapport à l'autre.

4. La caisse (1) telle que revendiquée dans n'importe quelle revendication précédente où la plate-forme (12), dans l'état de support, s'étend substantiellement à l'horizontale, et dans l'état de libération, s'étend substantiellement à la verticale et, de préférence, vers le bas, depuis l'axe de charnière (16).

5. La caisse (1) telle que revendiquée dans n'importe quelle revendication précédente comprenant un verrou (28) destiné à verrouiller la plate-forme (12) dans l'état de support, le verrou (28) pouvant fonctionner depuis un état de verrouillage verrouillant la plate-forme (12) dans l'état de support et un état de libération destiné à libérer la plate-forme (12) de l'état de support.

6. La caisse (1) telle que revendiquée dans n'importe quelle revendication précédente où le moyen de guidage est configuré pour guider l'au moins une de la ou des première et seconde mâchoires de serrage (18, 19) mobile(s) dans une direction substantiellement perpendiculaire à l'axe de charnière (16) de la plateforme (12).

7. La caisse (1) telle que revendiquée dans n'importe quelle revendication précédente où chacune des première et seconde mâchoires de serrage (18, 19) comprend une mâchoire de serrage allongée fournie par un élément de plaque (34), l'élément de plaque (34) définissant une surface de mise en prise d'animal correspondante (35) destinée à mettre en prise l'animal pendant le serrage de l'animal entre les mâchoires de serrage (18, 19) et, de préférence, à mettre en prise un côté adjacent du corps de l'animal.

8. La caisse (1) telle que revendiquée dans n'importe quelle revendication précédente où le moyen de guidage est situé aux extrémités opposées respectives des mâchoires de serrage (18, 19).

9. La caisse (1) telle que revendiquée dans n'importe quelle revendication précédente où la première mâchoire de serrage (18) est assujettie de manière rigide au support de mise en prise avec le sol (2), et la seconde mâchoire de serrage (19) est mobile par rapport à la première mâchoire de serrage (18).

10. La caisse (1) telle que revendiquée dans n'importe quelle revendication précédente où le moyen de retenue destiné à retenir la mâchoire mobile parmi les mâchoires de serrage (18, 19) dans l'état de serrage comprend un mécanisme à cliquet et à rochet (43),
de préférence, le mécanisme à rochet (43) comprend au moins une crémaillère à rochet allongée (45) et, de préférence, une paire de crémaillères à rochet (45) espacées, les crémaillères à rochet (45) étant situées de manière adjacente par rapport à des extrémités opposées des mâchoires de serrage (18, 19),
de préférence, chaque cliquet (48) est accouplé à un organe parmi le support de mise en prise avec le sol (2) et la première mâchoire de serrage (18), de préférence, chaque crémaillère à rochet (45) est accouplée à la seconde mâchoire de serrage (19),
de préférence, chaque crémaillère à rochet (45) comprend une pluralité de dents de rochet (46) espacées et, de préférence, la crémaillère à rochet (45) peut coulisser sur le support de mise en prise avec le sol (2).

11. La caisse (1) telle que revendiquée dans la revendication 10 où chaque cliquet (48) est accouplé de manière à pouvoir pivoter sur un organe parmi le support de mise en prise avec le sol (2) et la première mâchoire (18), et peut pivoter depuis un état mis en prise mettant en prise la crémaillère à rochet (45), et un état de libération destiné à libérer la seconde mâchoire de serrage (19) de l'état de serrage.

12. La caisse (1) telle que revendiquée dans n'importe laquelle des revendications 10 à 11 comprenant un mécanisme de fonctionnement (54) destiné à faire fonctionner le cliquet (48) entre l'état mis en prise et l'état de libération.

13. La caisse telle que revendiquée dans n'importe quelle revendication précédente comprenant un système de pesage configuré pour effectuer un enregistrement d'un animal retenu à l'intérieur de la caisse.

14. La caisse telle que revendiquée dans n'importe quelle revendication précédente comprenant un mécanisme de dosage, le mécanisme de dosage comprenant au moins un pistolet de dosage configuré pour effectuer un dosage d'un animal retenu à l'intérieur de la caisse.

15. La caisse telle que revendiquée dans la revendication 14 comprenant un lecteur en communication électronique avec une base de données, le lecteur étant configuré pour effectuer une identification d'un animal qui est retenu, la caisse étant configurée de telle sorte que l'activation du pistolet de dosage effectue une association d'un régime de dosage avec un animal identifié, l'association étant enregistrée dans la base de données.
